# EUROPÄISCHE PATENTANMELDUNG

(11) **EP 1 369 216 A1**
(43) Veröffentlichungstag der Anmeldung: **10.12.2003**
(21) Anmeldenummer: 03012340.0
(22) Anmeldetag: 30.05.2003
(51) Int. Cl.: B29C 45/16

(54) **Coinjections-Einheit für Spritzgiessmaschinen**

(30) Priorität: 04.06.2002 DE 10224907; 24.07.2002 DE 10233447
(71) Anmelder: Windsor Kunststofftechnologie GmbH, 63452 Hanau (DE)
(72) Erfinder: Jährling, Volker, 64342 Seeheim-Jugenheim (DE); Kranitz, Josef, 63674 Altenstadt (DE); Gaube, Erich, 63694 Limeshain (DE)
(74) Vertreter: Röther, Peter, Dipl.-Phys.

(57) **Zusammenfassung**

Die Erfindung betrifft eine Coinjections-Einheit für Spritzgießmaschinen zur Herstellung von Spritzgußteilen, insbesondere in Mehrkomponententechnik, bestehend aus zwei Plastifizieraggregaten und mindestens einer Einspritzdüse, wobei die mindestens eine Einspritzdüse (7,8) an einem beiden Plastifizieraggregaten (1,2) gemeinsamen Düsenkopf (4) angeordnet ist und beide Plastifizieraggregate (1,2) mittels eines Ventilsystems (11-13) sowohl gemeinsam als auch einzeln über einen Kanal (5,6) mit der Düse (7,8) verbindbar sind.

## Beschreibung

Die Erfindung betrifft eine Coinjections-Einheit für Spritzgießmaschinen für Verfahren zur Herstellung von Spritzgußteilen, insbesondere in Mehrkomponententechnik, bestehend aus zwei Plastifizieraggregaten und mindestens einer Einspritzdüse.

Bei der angesprochenen Mehrkomponententechnik unterscheidet man einerseits das Sandwichmolding und andererseits das Overmolding. Bei der Sandwichtechnik unterscheidet man wiederum einerseits die simultanen Techniken wie 2 K-Technik, 3 K-Technik oder GID und andererseits die serielle Technik wie Monosandwich-Verfahren und Gasinjektionsverfahren.

Beim Overmolding unterscheidet man bei den Werkzeugen einmal die Wechselkavitäten und zum anderen den Einkavitätstyp.

Während man beim Sandwichmolding kompatible Materialien verwendet, sind bei der Overmolding-Technik auch inkompatible Materialien möglich.

Im Stand der Technik sind beim Sandwichmolding (2 K-Technik) parallel verlaufende Düsen, die sich allerdings in einer gemeinsamen Austrittsöffnung treffen, sowie konzentrisch ausgestaltete Düsenformen bekannt.

Beim Overmolding-Verfahren sind zwei Plastifzier- und Einspritzaggregate parallel zueinander an einem Werkzeug angeordnet, das beispielsweise ein Drehwerkzeug sein kann, indem zunächst von dem einen Spritzaggregat ein Vorformling gebildet wird und nach Drehung des Werkzeugs über das zweite Spritzaggregat die Fertigteilkomponente hinzugefügt wird.

Statt des Drehwerkzeugs kann auch ein Werkzeug mit vergrößerbarem Kavitätsvoumen verwendet werden.

Ein weiteres Konzept, das beim Monosandwich-Verfahren eingesetzt wird, besteht aus einem Hauptspritzaggregat und einem im rechten Winkel dazu angeordneten Nebenextruder. Eine Komponente wird im Hauptspritzaggregat plastifiziert. Über einen Hotrunner wird durch den Nebenextruder plastifizierte Masse in den Schneckenvorraum des Hauptspritzaggregats befördert. So gepackt, wird dann die plastifizierte Masse in das Spritzgießwerkzeug eingespritzt.

Allen vorbeschriebenen Techniken gemeinsam ist es, daß jeweils eine andere Düsentechnik bzw. eine andere Anordnung der Plastifizier- und Einspritzaggregate notwendig ist.

Aufgabe der vorliegenden Erfindung ist es demgegenüber, eine Coinjections-Einheit der eingangs genannten Art so auszugestalten, daß sie bei allen vorgenannten Verfahren ohne konstruktive Änderungen einsetzbar ist.

Die Erfindung löst diese Aufgabe gemäß dem kennzeichnenden Teil des Patentanspruchs 1 dadurch, daß mindestens eine Einspritzdüse an einem der beiden Plastifiziereinheiten gemeinsamen Düsenkopf angeordnet ist und beide Plastifizieraggregate mittels eines Ventilsystems sowohl gemeinsam als auch einzeln mit der Düse verbindbar sind.

Dieser Düsenkopf ist an einen die beiden Enden der Plastifizieraggregate miteinander koppelnden Flansch anmontiert, in dem Spritzkanäle vom jeweiligen Plastifizieraggregat zum zur mindestens eine Düse führenden Kanal führen. Für den Spritzgießvorgang werden die beiden miteinander gekoppelten Plastifizieraggregate an die Werkzeugaufspannplatte herangefahren, derart, daß der Düsenkopf zusammen mit dem Flansch in die Öffnung in der Werkzeugaufspannplatte hineintaucht und sich die Düse im Bereich des Angußkanals an das Werkzeug anlegt.

Mit Hilfe der erfindungsgemäßen Vorrichtung gemäß Anspruch 1 ist es möglich, mittels eines der Plastifizieraggregate einen Nachdruck zu halten, während das andere Plastifizieraggregat schon wieder plastifiziert.

Weiterhin ist es mit dieser Vorrichtung möglich, im unteren Plastifizieraggregat zunächst zu plastifizieren und dann schichtartig aus der oberen Plastifiziereinheit plastifiziertes Material vor die Schnecke zu bringen.

Im Gegensatz zum Stand der Technik (s. oben) durchläuft das zweite Material nur eine kurze Strecke innerhalb des Flansches.

Eine dritte Möglichkeit, die die erfindungsgemäße Vorrichtung gemäß Anspruch 1 bietet, liegt darin, daß eine Düse sequentiell aus beiden Plastifizierzylindern versorgt werden kann.

Alle drei Möglichkeiten sind ohne konstruktive Änderungen der Vorrichtung möglich, da lediglich die Ventile im angesprochenen Ventilsystem entsprechend eingestellt werden müssen.

In einer bevorzugten Ausführungsform der Erfindung ist vorgesehen, daß der Düsenkopf zwei parallel zueinander verlaufende, in je eine Düse mündende Kanäle aufweist, wobei das Ventilsystems derart ausgestaltet ist, daß zumindest eine Plastifiziereinheit wahlweise mit dem einen oder dem anderen oder das beide Plastifizieraggregate mit jeweils einer Düse verbindbar sind.

Somit kann jede Düse getrennt voneinander mit unterschiedlichen plastifizierten Massen versorgt werden. Alternativ kann jeweils nur eine Düse versorgt werden. Gleichwohl sind auch die zu Anspruch 1 beschriebenen Möglichkeiten mit Hilfe der Vorrichtung gemäß Patentanspruch 2 durch entsprechendes Schalten des Ventilsystems durchführbar.

Gemäß Anspruch 4 sind die Ventile des Ventilsystems mittels Druckmittelzylindern (beispielsweise Hydraulikzylindern) betätigbar.

Hierbei können die Druckmittelzylinder seitlich am Düsenkopf und das Ventilsystem im Düsenkopf angeordnet sein. Bei dieser Bauform sind die Längsachsen der Druckmittelzylinder im wesentlichen parallel zur Längsachse des Düsenkopfs angeordnet und tauchen gemeinsam mit diesem in die in der Werkzeugaufspannplatte vorhandene Öffnung ein.

Alternativ kann gemäß Anspruch 6 vorgesehen sein, daß die Druckmittelzylinder und das Ventilsystem zwischen Plastifizieraggregat und Düsenkopf in dem Flansch bzw. an dem Flansch angeordnet sein können. In diesem Fall ist man in der Wahl der Stellung der Druckmittelzylinder freier. Dadurch, daß die Druckmittelzylinder beim Spritzgießvorgang nicht in die in der Formwerkzeugaufspannplatte vorhandene Öffnung eintauchen, sind sie frei zugänglich.

Darüber hinaus braucht auch die Öffnung in der Werkzeugaufspannplatte nicht so groß dimensioniert sein wie bei der ersten Alternative.

Die die einzelnen Kanäle miteinander verbindenden bzw. absperrenden Ventile werden über Hebel, an denen die Druckmittelzylinder angreifen, geöffnet oder geschlossen.

In einem bevorzugten Ausführungsbeispiel sind drei Ventile vorgesehen, von denen das eine die Verbindung vom ersten Plastifizieraggregat zum Düsenkankanal bzw. zu einem der Düsenkanäle herstellt oder unterbricht. Ein zweites Ventil ist dem zweiten Plastifizieraggregat zugeordnet, und dient zur Unterbrechung bzw. Herstellung der Verbindung zwischen dem Plastifizierzylinder dieses Plastifizieraggregates und der mindestens einen Düse.

In dem Falle, daß zwei Kanäle innerhalb des Düsenkopfes vorgesehen sind, dient ein drittes Ventil dazu, die Verbindung zwischen dem ersten Plastifizieraggregat und dem Schneckenvorraum des zweiten Plastifizieraggregats bzw. dem dem zweiten Plastifizieraggregat zugeordneten Düsenkanal herzustellen bzw. zu unterbrechen, oder aber eine Verbindung vom ersten Plastifizieraggregat zum ersten Düsenkanal herzustellen. Dieser zweite Düsenkanal beginnt daher in dem Verbindungskanal zwischen dem ersten Plastifizieraggregat und dem dem zweiten Plastifizieraggregat zugeordneten Düsenkanal.

Die Erfindung wird im folgenden anhand von Zeichnungen dargestellt und näher erläutert.

Es zeigen:
- Fig. 1:: eine Coinjections-Einheit (teilweise in abgebrochener Darstellung) in einer ersten Variante,
- Fig. 2:: Coinjections-Einheit gemäß Fig. 1 in einer zweiten Variante,
- Fig. 3:: Coinjections-Einheit gemäß Fig. 1 in einer ersten Verwendung (Zweikomponenten),
- Fig. 4:: Coinjections-Einheit in einer zweiten Verwendung (zusätzlicher Nachdruck),
- Fig. 5:: Coinjections-Einheit gemäß Fig. 1 in einer dritten Verwendung (sequentielle Einspritzung),
- Fig. 6:: Coinjections-Einheit gemäß Fig. 1 in einer weiteren Verwendung (Monosandwich).

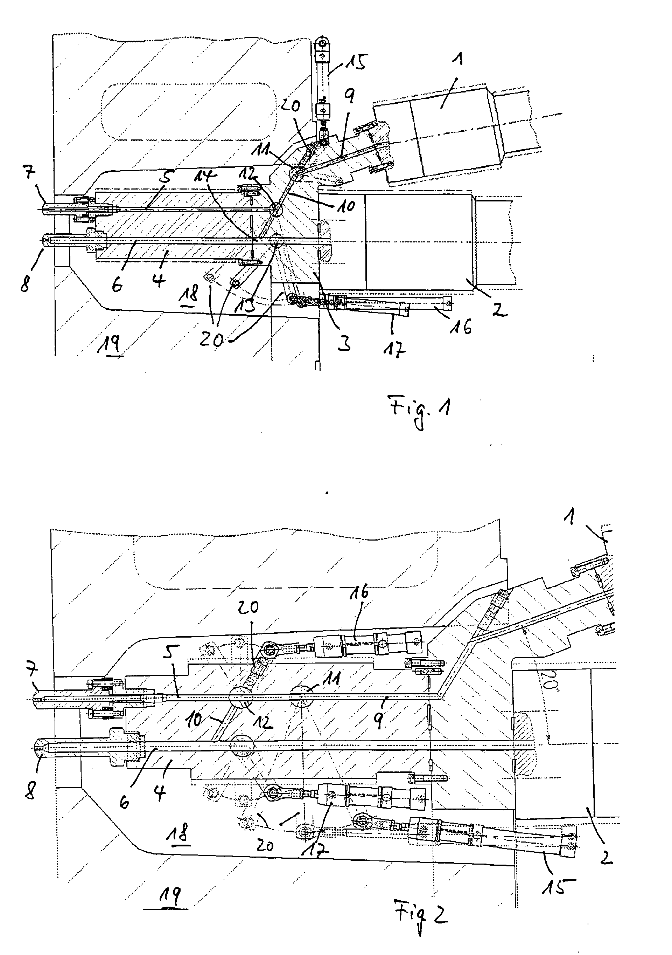

In den Figuren sind gleiche Bauteile mit den gleichen Bezugszeichen versehen. Wie aus der. Fig. 1 hervorgeht, besteht die erfindungsgemäße Vorrichtung aus lediglich in abgebrochener Darstellung dargestellten Plastifizier- und Einspritzaggregaten 1 und 2. Die Ausgänge beider Plastifizieraggregate 1 und 2 sind mittels eines Flansches 3 miteinander verbunden. An den Flansch 3 ist in etwa koaxial zum Plastifizieraggregat 2 ein Düsenkopf 4 anmontiert, in dem zwei parallel zueinander angeordnete Kanäle 5 und 6 vorgesehen sind, an deren freien Enden die eigentlichen Düsen 7 und 8 angeordnet sind.

Der Kanal 6 fluchtet mit dem Einspritzkanal des Plastifizieraggregates 2, während der Kanal 5 in einem den Kanal 6 mit dem Einspritzkanal 9 des Plastifizieraggregates 1 verbindenden Querkanal 10 endet.

An der Verbindungsstelle des Querkanals 10 mit dem Einspritzkanal 9 des Plastifizieraggregats 1 befindet sich ein Ventil 11. Ein weiteres Ventil 12 ist im Bereich der Einmündung des Kanals 5 im Querkanal 10 angeordnet. Ein drittes Ventil 13 befindet sich im Einspritzkanal des Plastifizieraggregates 2, und zwar vor der Einmündungsstelle 14 des Querkanals 10 im Düsenkanal 6.

Das Ventil 11 wird durch einen Druckmittelzylinder 15 betätigt, während das Ventil 12 durch einen Druckmittelzylinder 16 und das Ventil 13 durch einen Druckmittelzylinder 17 betätigt wird. Hierzu führen von den Kolbenstangen der Druckmittelzylinder 15 und 16, 17 Hebel 20 zu den Schaltgliedern der entsprechenden Ventile 11, 12 und 13. Dabei können die Ventile 11, 12, 13 als Schiebeventile aber auch als Schwenkventile ausgebildet sein.

In der Fig. 1 ist eine Variante der erfindungsgemäßen Vorrichtung dargestellt, bei der die Druckmittelzylinder und die Ventile im Bereich des Flansches 3 angeordnet sind. Dargestellt ist die Spritzstellung der Coinjections-Einheit, wobei der Flansch 3 und der Düsenkopf 4 in einer Öffnung 18 einer Werkzeugaufspannplatte 19 für die nicht dargestellte Werkzeughälfte eines Spritzgießwerkzeugs eingeführt ist.

In der Fig. 2 ist eine Alternative zur Vorrichtung gemäß Fig. 1 dargestellt. Hier sind die Ventile 11 bis 13 im Düsenkopf 4 angeordnet, wozu auch die Druckmittelzylinder 15, 16, 17 in diesem Bereich angreifen. Damit sie beim Spritzvorgang in die Öffnung 18 passen, sind sie so angeordnet, daß ihre Längsachsen im wesentlichen parallel zur Längsachse des Düsenkopfes 4 verlaufen.

Mit dem Bezugszeichen 20 sind wie in Fig. 1 die Hebel zur Betätigung der Ventile 11 bis 13 bezeichnet.

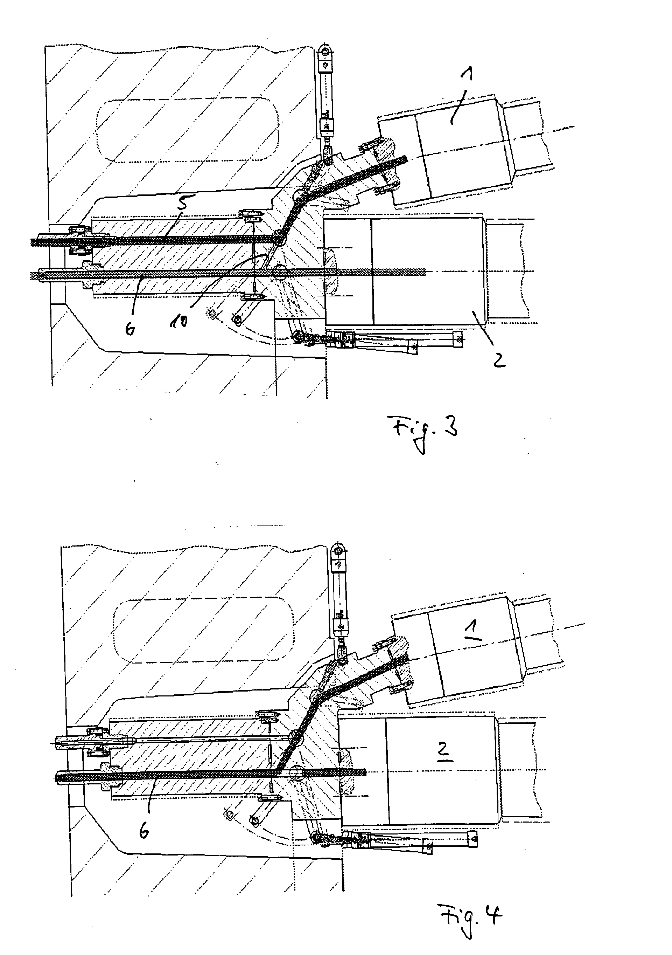

In der Fig. 3 ist eine erste Verwendungsmöglichkeit der erfindungsgemäßen Vorrichtung dargestellt. Hierbei handelt es sich um Zweikomponenten-Spritzgießen. D.h. jedes Plastifizieraggregat 1 bzw. 2 ist mit je einem Kanal 5 bzw. 6 und somit einer entsprechenden Düse 7 bzw.8 verbunden. Die Querverbindung 10 zwischen Kanal 5 und 6 ist mittels des Ventils 12 geschlossen. Die Ventile 11 und 13 sind jedoch geöffnet. Mit der gleichen Ventilstellung können auch zwei verschiedene Produkte in einer Form hergestellt, oder mittels eines Hotrunners (Heißkanalverteilers) im Spritzgießwerkzeug zwei Komponenten zu einem Teil gespritzt werden.

Die Fig. 4 zeigt eine Verwendungsmöglichkeit, bei der durch das Plastifizieraggregat 1 über die Kanäle 9, 10 und 6 ein Nachdruck aufrechterhalten werden kann, während das Plastifizieraggregat 1 für einen weiteren Spritzvorgang bereits wieder Material plastifizieren kann. Hierzu ist das Ventil 13 geschlossen. Die Vorteile hierbei sind einerseits ein größeres Plastifiziervolumen, andererseits eine Zykluszeitreduktion und - wie gesagt - die Plastifizierung im Aggregat 2 parallel zum Nachdruck durch Aggregat 1.

Bei der Vorrichtung gemäß Fig. 5 sind die Ventile 11 bis 13 so geschaltet, daß sowohl aus dem Plastifizieraggregat 1 als auch aus dem Plastifizieraggregat 2 sequentiell über den Kanal 6 plastifiziertes Material in den Formhohlraum eingespritzt werden kann.

Die Aggregate 1 und 2 spritzen in einer definierten Folge ein, wobei beispielsweise das eine Aggregat für das Hauptmaterial des zu spritzenden Teils benützt wird, während das zweite Aggregat das Kernmaterial, das billigeres recyceltes Material sein kann, liefert.

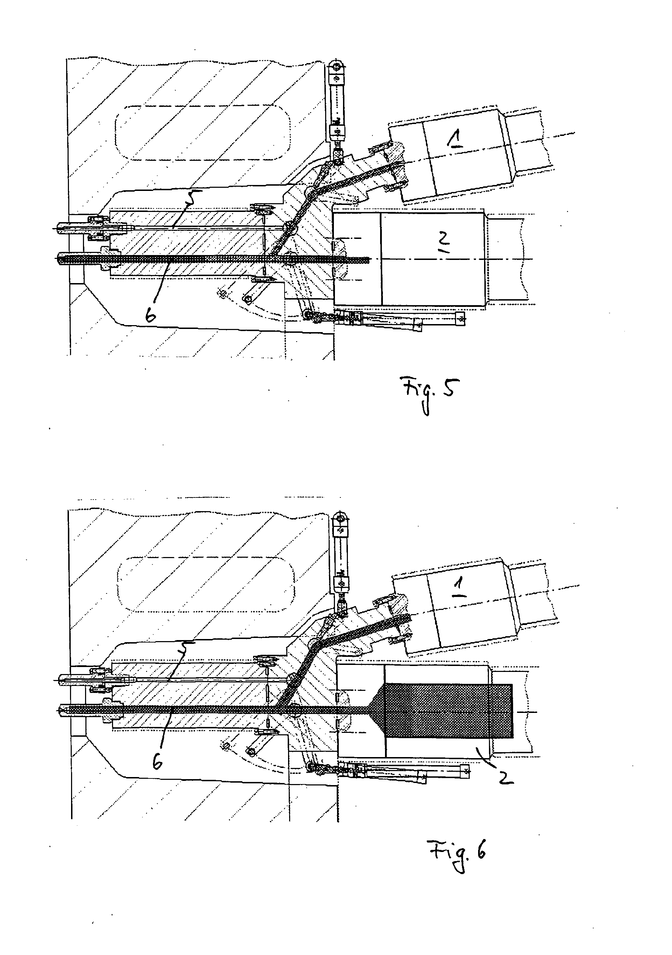

In der Fig 6 schließlich ist eine weitere Verwendungsmöglichkeit des erfindungsgemäßen Aggregats dargestellt, bei der im Plastifizieraggregat 2 ein erstes Material plastifiziert wird, wonach dann aus dem Plastfizieraggregat 1 über die Verbindung 9, 10 und 14 ein zweites Material vor das im Aggregat 2 plastifizierte Material gepackt wird. Diese Technik wird Monosandwich-Technik genannt. Zwei Schmelzen sind hintereinander in einem Einspritzzylinder geschichtet, wobei ebenfalls ein "frisches" mit einem recycelten Material kombiniert werden kann.

Die in der allgemeinen Beschreibung aufgezählten Mehrkomponenten-Techniken sind daher mittels der erfindungsgemäßen Einheit auf einfache, insbesondere konstruktiv einfache Art und Weise zu verwirklichen.

## Patentansprüche

1. Coinjections-Einheit für Spritzgießmaschinen zur Herstellung von Spritzgußteilen, insbesondere in Mehrkomponententechnik, bestehend aus zwei Plastifizieraggregaten und mindestens einer Einspritzdüse,
**dadurch gekennzeichnet,**
**daß** die mindestens eine Einspritzdüse (7,8) an einem beiden Plastifizieraggregaten (1,2) gemeinsamen Düsenkopf (4) angeordnet ist und beide Plastifizieraggregate (1,2) mittels eines Ventilsystems (11-13) sowohl gemeinsam als auch einzeln über einen Kanal (5,6) mit der Düse (7,8) verbindbar sind.

2. Coinjections-Einheit nach Anspruch 1,
**dadurch gekennzeichnet,**
**daß** der Düsenkopf (4) zwei parallel zueinander verlaufende, in je eine Düse (7,8) mündende Kanäle (5, 6) aufweist, wobei das Ventilsystem (11-13) derart ausgestaltet ist, daß zumindest ein Plastifizieraggregat (1,2) wahlweise mit dem einen oder den anderen Kanal (5,6) verbindbar ist.

3. Coinjections-Einheit nach Anspruch 1 oder 2,
**dadurch gekennzeichnet,**
**daß** mittels des Ventilsystems (11-13) ein Plastifizieraggregat (1) mit dem Schneckenvorraum des anderen Plastifizieraggregats (2) verbindbar ist.

4. Coinjections-Einheit nach einem der Ansprüche 1 bis 3, **dadurch gekennzeichnet,**
**daß** die Ventile (11-13) des Ventilsystems mittels Druckmittelzylindern (15-17) betätigbar sind.

5. Coinjections-Einheit nach Anspruch 4,
**dadurch gekennzeichnet,**
**daß** die Druckmittelzylinder (15-17) seitlich am Düsenkopf (4) und das Ventilsystem (11-13) im Düsenkopf (4) angeordnet ist.

6. Coinjections-Einheit nach Anspruch 4,
**dadurch gekennzeichnet,**
**daß** die Druckmittelzylinder (15-17) und das Ventilsystem (11-13) zwischen Plastifizieraggregaten (1,2) und Düsenkopf (4) angeordnet sind.

7. Coinjections-Einheit nach einem der Ansprüche 1 bis 6,
**dadurch gekennzeichnet,**
**daß** die Ventile (11-13) des Ventilsystems durch Hebelgetriebe (20) betätigbar sind.
